# EUROPEAN PATENT APPLICATION

(11) **EP 4 679 663 A1**
(43) Date of publication of application: **14.01.2026**
(21) Application number: 24767184.5
(22) Date of filing: 06.03.2024
(51) Int. Cl.: H02J 7/00, H01M 4/13, H01M 10/48, H01M 10/54

(54) **RECYCLE DETERMINATION METHOD FOR ELECTRODE OF SECONDARY BATTERY AND RECYCLE DETERMINATION PROGRAM FOR ELECTRODE OF SECONDARY BATTERY**

(30) Priority: 08.03.2023 JP 2023035624
(71) Applicant: Maxell, Ltd., Kyoto 618-8525 (JP)
(72) Inventor: KISHIMI, Yuko, Otokuni-gun, Kyoto 618-8525 (JP); MATSUMOTO, Nobuaki, Otokuni-gun, Kyoto 618-8525 (JP)
(74) Representative: Mewburn Ellis LLP
(86) International application number: PCT/JP2024/008582
(87) International publication number: WO 2024/185817

(57) **Abstract**

A method of determining the recyclability of an electrode of a secondary battery is provided that allows determining the degree of deterioration of an electrode to be recycled. The method of determining the recyclability of an electrode of a secondary battery includes: estimating characteristic parameters of the secondary battery subject to determination at the time of determination (step S1); obtaining the relationship between the electrolyte diffusion coefficient and the discharge capacity (step S2); based on the relationship between the electrolyte diffusion coefficient and the discharge capacity, determining a threshold value Dth of electrolyte diffusion coefficient (step S3); and comparing the threshold value Dth and a threshold value Dth0 of electrolyte diffusion coefficient before deterioration obtained in advance for the secondary battery subject to determination or a secondary battery of the same type as the secondary battery subject to determination, and, based on the difference between the threshold value Dth and the threshold value Dth0, ΔDth = Dth - Dth0, classifying the secondary battery subject to determination (step S4).

## Description

### Technical Field

The present invention relates to a method of determining the recyclability of an electrode of a secondary battery and a program for determining the recyclability of an electrode of a secondary battery.

### Background Art

Primarily under the initiative of the European Union, laws and regulations concerning the recycling of secondary batteries such as lithium-ion batteries are being developed. Specifically, laws and regulations are being developed to require that specified percentages or more of the materials used in secondary batteries be reused in secondary batteries.

As used herein, the term "recycling" of a secondary battery is used to refer to a concept that encompasses all of the following: (a) disassembling a secondary battery and recovering a reusable part; (b) performing a predetermined treatment on a part obtained by disassembling a secondary battery to make it reusable; and (c) recovering a material (e.g., valuable metal) from a part of a secondary battery. The concept of a "recycling" of a secondary battery as used herein is different from that of "reuse" of a secondary battery (i.e., reuse of a secondary battery itself rather than a part of material thereof). Generally, secondary batteries determined to be unsuitable for reuse are recycled.

JP 2010-34021 A describes a method of recovering oxide-containing battery materials from a waste battery. This recovery method includes: recovering a substrate having oxide-containing battery materials adhering thereto; immersing it in a solvent that essentially does not allow oxides to dissolve and thus peeling the battery materials from the substrate; and separating the peeled battery materials from the substrate. The solvents listed in this publication include N-methyl-2-pyrrolidone, water, dimethyl carbonate, diethyl carbonate, and chloroform. This publication also teaches that the recovered oxides are baked at a temperature not lower than 600 °C and not higher than 1100 °C.

Japanese Patent No. 5141970 describes a method of recovering a positive electrode active material from the positive electrode of a lithium battery. A lithium battery that this recovering method may be applied to includes a positive electrode active material layer of a material containing a positive electrode active material, conductive agent and binding agent dispersed in a water-based solvent, the material being applied to the surface of the positive electrode current collector. This recovering method includes: immersing the positive electrode in an alkali aqueous solution and thus peeling the positive electrode active material layer from the positive electrode current collector; adding an organic solvent to the peeled positive electrode active material layer and thus extracting the binding agent from the peeled material; and separating, from the remaining material after the extracting step, a supernatant containing the conductive agent and a sediment containing the positive electrode active material.

JP 2017-97997 A describes a characteristic analysis method for a secondary battery in which a model equation, parameters of which are characteristic values of members constituting the battery, is used, and the characteristic values of the member are estimated by fitting a voltage value of the battery represented by the model equation with actual measurement data. In this characteristic analysis method, the actual measurement data used is obtained by applying a charge/discharge pattern to the battery under analysis, which includes an operation period consisting of either a constant current discharge period or a constant current charge period, followed by a rest period.

### Citation List

### Patent Literature

Patent Document 1: JP 2010-34021 A
Patent Document 2: Japanese Patent No. 5141970
Patent Document 3: JP 2017-97997 A

### Summary of Invention

### Technical Problem

Generally, there are three types of recycling of an electrode of a secondary battery;
(1) Horizontal recycling: A secondary battery is disassembled, the electrode mixture is washed, and is reused as an electrode without any further treatment.
(2) Wet recycling: A secondary battery is disassembled, the active material is recovered from the electrode mixture, a regeneration treatment is performed as necessary, where lithium and/or other substances are added, and the resulting active material is reused.
(3) Dry recycling: A secondary battery is disassembled or combusted, the materials are refined and recovered as metal materials.

Of these types, dry recycling is the costliest type; as such, horizontal or wet recycling is preferred wherever possible. Whether horizontal or wet recycling is possible depends on the degree of deterioration of the electrode. In view of this, the degree of deterioration of each individual electrode may be evaluated and different recycling types may be used depending on the degree of deterioration.

An object of the present invention is to provide a method of determining the recyclability of an electrode of a secondary battery that allows determining the degree of deterioration of an electrode to be recycled, and to provide such a program for determining the recyclability of an electrode of a secondary battery.

### Solution to Problem

A method of determining recyclability of an electrode of a secondary battery according to an embodiment of the present invention is a method of determining recyclability of an electrode of a secondary battery by determining a degree of deterioration of an electrode included in a secondary battery subject to determination, including: based on data obtained by measuring the secondary battery subject to determination, estimating characteristic parameters of the secondary battery subject to determination at a time of determination using a predetermined model equation, the characteristic parameters including an electrolyte diffusion coefficient of the secondary battery subject to determination at the time of determination; based on the model equation and the estimated characteristic parameters, calculating a discharge capacity found when the electrolyte diffusion coefficient has been changed, and obtaining a relationship between the electrolyte diffusion coefficient and the discharge capacity; based on the relationship between the electrolyte diffusion coefficient and the discharge capacity, determining a threshold value Dth of electrolyte diffusion coefficient; and comparing the threshold value Dth and a threshold value Dth0 of electrolyte diffusion coefficient before deterioration obtained in advance for the secondary battery subject to determination or a secondary battery of the same type as the secondary battery subject to determination, and, based on a difference between the threshold value Dth and the threshold value Dth0, ΔDth = Dth - Dth0, classifying the secondary battery subject to determination.

A program for determining recyclability of an electrode of a secondary battery according to an embodiment of the present invention is a program for determining recyclability of an electrode of a secondary battery by determining a degree of deterioration of an electrode included in a secondary battery subject to determination, the program configured to cause a computer to perform: based on data obtained by measuring the secondary battery subject to determination, estimating characteristic parameters of the secondary battery subject to determination at a time of determination using a predetermined model equation, the characteristic parameters including an electrolyte diffusion coefficient of the secondary battery subject to determination at the time of determination; based on the model equation and the estimated characteristic parameters, calculating a discharge capacity found when the electrolyte diffusion coefficient has been changed, and obtaining a relationship between the electrolyte diffusion coefficient and the discharge capacity; based on the relationship between the electrolyte diffusion coefficient and the discharge capacity, determining a threshold value Dth of electrolyte diffusion coefficient; and comparing the threshold value Dth and a threshold value Dth0 of electrolyte diffusion coefficient before deterioration obtained in advance for the secondary battery subject to determination or a secondary battery of the same type as the secondary battery subject to determination, and, based on a difference between the threshold value Dth and the threshold value Dth0, ΔDth = Dth - Dth0, classifying the secondary battery subject to determination.

### Advantageous Effects of Invention

The present invention allows determining the degree of deterioration of an electrode to be recycled.

### Brief Description of Drawings

FIG. 1 is a flow chart of a method of diagnosing a secondary battery.
FIG. 2 is a flow chart illustrating a more specific exemplary procedure of the step of estimating characteristic parameters.
FIG. 3 is a graph illustrating an exemplary relationship between electrolyte diffusion coefficient and discharge capacity.
FIG. 4 illustrates an exemplary manner in which a threshold value Dth is determined.
FIG. 5 is a flow chart of a method of determining the recyclability of an electrode of a secondary battery according to a first embodiment of the present invention.
FIG. 6 is a flow chart of a method of determining the recyclability of an electrode of a secondary battery according to a second embodiment of the present invention.
FIG. 7 illustrates an exemplary process of classifying a battery subject to determination according to the present embodiment.
FIG. 8 illustrates another exemplary process of classifying a battery subject to determination according to the present embodiment.
FIG. 9 is a flow chart of a method of determining the recyclability of an electrode of a secondary battery according to a third embodiment of the present invention.
FIG. 10 is an SEM micrograph of the positive electrodes (LCO) of Determination Examples 1 to 3 in their initial state.
FIG. 11 is an SEM micrograph of the positive electrode of Determination Example 1 after deterioration.
FIG. 12 is an SEM micrograph of the positive electrode of Determination Example 2 after deterioration.
FIG. 13 is an SEM micrograph of the positive electrode of Determination Example 3 after deterioration.
FIG. 14 is an SEM micrograph of the positive electrodes (NCM) of Determination Examples 4 and 5 in their initial state.
FIG. 15 is an SEM micrograph of the positive electrode of Determination Example 4 after deterioration.
FIG. 16 is an SEM micrograph of the positive electrode of Determination Example 5 after deterioration.

### Description of Embodiments

The degree of deterioration of an electrode can be mainly determined based on two points: discharge capacity per unit weight and discharge characteristics. Even when a certain discharge capacity per unit weight of an electrode has been maintained, this electrode should not be horizontally recycled if its discharge characteristics have decreased.

In the past, the present inventors developed a method of diagnosing a secondary battery focusing on electrolyte diffusion coefficient (PCT/JP2023/003516). According to this diagnostic method, the load characteristics of a secondary battery are measured and, based on the data obtained, characteristic parameters of the secondary battery being diagnosed at the time of diagnosis (e.g., electrolyte diffusion coefficient Dn and electrolyte conductivity) are estimated. Next, based on a model equation and the estimated parameters, the relationship between electrolyte diffusion coefficient and discharge capacity is determined. Based on this relationship between electrolyte diffusion coefficient and discharge capacity, the value of electrolyte diffusion coefficient at which the secondary battery becomes not suitable for reuse (i.e., threshold value), Dth, is determined. The larger the difference between the electrolyte diffusion coefficient Dn at the time of diagnosis and the threshold value Dth, ΔD = Dn - Dth, the higher the evaluated possibility that the secondary battery being diagnosed can still be used for a long time (i.e., the remaining life is long).

The present inventors turned their attention to the threshold value Dth obtained in the process of performing the above-described diagnosis method. The threshold value Dth changes depending on the rate of discharge current. Thus, the threshold value Dth may indirectly reflect discharge characteristics of the electrode to be recycled.

The above-described diagnostic method involves rounding changes in characteristic parameters other than electrolyte diffusion coefficient into changes in electrolyte diffusion coefficient to allow evaluation of the remaining life based on one parameter (i.e., electrolyte diffusion coefficient). It has been known that this approach allows relatively precise evaluation of the remaining life of a secondary battery.

However, in an actual secondary battery, cycle-related deterioration causes changes in characteristic parameters other than electrolyte diffusion coefficient (e.g., electrolyte conductivity). Thus, if, after the time of diagnosis, a renewed measurement of load characteristics and other steps are performed to estimate the latest characteristic parameters and a threshold value Dth is determined in the same manner as discussed above based on these latest characteristic parameters, the threshold value Dth reflecting the latest characteristic parameters may be different from the threshold value Dth that was determined based on the characteristic parameters at the time of diagnosis.

In other words, exactly speaking, the threshold value Dth obtained in the process of performing the above-described diagnostic method varies depending on the timing of performing diagnosis. In other words, the threshold value Dth itself changes as the cycle deterioration of the secondary battery progresses.

The present inventors investigated the relationship between the manner in which an electrode of a secondary battery deteriorates and the threshold value Dth, and then discovered that a secondary battery in which the threshold value Dth is changing in an increasing trend as cycle deterioration progresses is experiencing one of the following two events: (i) a significant decrease in the porosity of the electrode mixture layer to block paths for ions within the electrolyte; and (ii) structural deterioration of the electrode.

To provide some supplemental explanation regarding event (i), an electrode mixture layer generally tends to expand during use; if few precipitates are produced by electrolyte reaction, the porosity increases over cycles. However, if a large number of precipitates are produced by the electrolyte reactant, the precipitates may clog the pores to decrease the porosity.

Nevertheless, an actual secondary battery seldom experiences a kind of deterioration with a significant decrease in porosity as cycle deterioration progresses, as in event (i). Thus, if the threshold value Dth is changing in an increasing trend as cycle deterioration progresses, it can usually be determined that event (ii) is happening, i.e., structural deterioration of the electrode.

In other words, it can be determined to be highly likely that a structural deterioration of the electrode has occurred if a comparison between a threshold value Dth0 obtained by performing the above-described diagnostic method on a secondary battery before deterioration (e.g., in its initial state) and a threshold value Dth obtained by performing the above-described disagnostic method on the secondary battery after deterioration shows that the difference ΔDth = Dth - Dth0 is larger than a predetermined value.

As used herein, "structural deterioration" of an electrode refers to situations where, for example, the active material particles in the electrode have developed cracks or a phase change has occurred due to chemical deterioration such that the ion diffusivity in the solid phase of the active material particles themselves has decreased. An electrode that has experienced structural deterioration is thought to be not only unsuitable for horizontal recycling but also for wet recycling. The regeneration treatment during wet recycling is a step where, for example, an active material with decreased lithium content due to deterioration is mixed with a lithium material and baked again to achieve recovery to initial lithium content. If the active material particles themselves have developed cracks, for example if they have broken, recovering from this through a regeneration treatment would be a difficult process.

On the other hand, if the difference ΔDth is not larger than a predetermined value, it can be determined to be highly likely that event (ii), i.e., structural deterioration, has not occurred or, even if some such deterioration has occurred, the porosity of the electrode mixture layer has increased due to mixture expansion to ensure that there are larger ion diffusion paths, thus maintaining sufficient discharge characteristics.

The present invention was made based on the above discoveries. Now, embodiments of the present invention will be described in detail with reference to the drawings.

### Embodiments

A method of determining the recyclability of an electrode of a secondary battery according to an embodiment of the present invention involves determining the degree of deterioration of the electrode of the secondary battery based on a "threshold value Dth of electrolyte diffusion coefficient", discussed further below, and classifying the secondary battery. First, to explain "threshold value Dth of electrolyte diffusion coefficient", a "secondary battery diagnostic method" using such a "threshold value Dth of electrolyte diffusion coefficient" will be described.

The "secondary battery diagnostic method" discussed below is different from a "method of determining the recyclability of an electrode of a secondary battery", and is a method mainly used to determine whether a secondary battery is suitable for reuse, and more specifically a method for evaluating the remaining life of a secondary battery. The applicant has also filed a patent application for the invention of this method (PCT/JP2023/003516).

### Secondary Battery Diagnostic Method

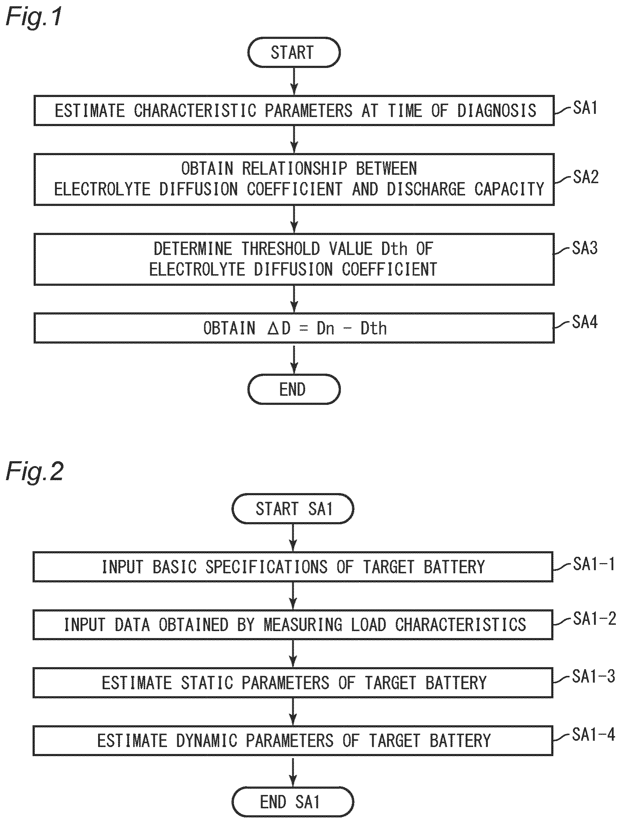

FIG. 1 is a flowchart of a secondary battery diagnostic method. This diagnostic method includes a process of estimating characteristic parameters of a secondary battery to be diagnosed (hereinafter "target battery") at a time of diagnosis (step SA1), a process of obtaining the relationship between the electrolyte diffusion coefficient and the discharge capacity (step SA2), a process of determining the threshold value Dth of the electrolyte diffusion coefficient (step SA3), and a process of obtaining the difference ΔD between the threshold value Dth and the electrolyte diffusion coefficient Dn at the time of diagnosis (step SA4). Hereinafter, each process will be described in detail.

### Process of Estimating Characteristic Parameters

Characteristic parameters of the target battery at the time of diagnosis are estimated (step SA1). More specifically, on the basis of the data obtained by measuring the load characteristics of the target battery, the characteristic parameters of the target battery at the time of diagnosis, including the electrolyte diffusion coefficient Dn of the target battery at the time of diagnosis, are estimated by using a predetermined model equation.

In this process, characteristic parameters of the target battery at the time of diagnosis are estimated by fitting the data obtained by measuring the load characteristics of the target battery by using a predetermined model equation. This analysis (simulation) can be performed by a computer program that can perform fluid analysis, and can be performed by, for example, the software Battery Design Studio available from Siemens AG.

The model equation used can be an equation well known in this field. As the model equation, for example, the equation described in Marc Doyle et al., "Modeling of Galvanostatic Charge and Discharge of the Lithium/Polymer/Insertion Cell," J. Electrochem. Soc., Vol. 140, No. 6, June (1993) can be used.

The target battery is, for example, a lithium ion battery.

The data obtained by measuring the load characteristics of the target battery is, for example, a discharge curve obtained by measuring the target battery at a plurality of discharge rates. This data preferably includes a discharge curve obtained by measurement at an extremely low discharge rate (0.02 C, for example). Further, this data preferably includes a discharge curve obtained by measurement at a discharge rate of 1 C or higher. This data preferably includes a discharge curve obtained by measurement at discharge rates of three or more levels, and more preferably includes a discharge curve obtained by measurement at discharge rates of four or more levels. The data obtained by measuring the load characteristics of the target battery may be a charge curve obtained by measuring the target battery at a plurality of charge rates.

The characteristic parameters estimated in this process (characteristic parameters of the target battery at the time of diagnosis) include at least the electrolyte diffusion coefficient Dn of the target battery at the time of diagnosis. The characteristic parameters can include, for example, a solid-phase diffusion coefficient of positive and negative electrode active materials and an electrolyte conductivity. Other specific examples of the characteristic parameters will be described below.

FIG. 2 is a flowchart illustrating an example of a more specific procedure of the process of estimating characteristic parameters (step SA1). In this example, the process of estimating the characteristic parameters (step SA1) includes a process of inputting basic specifications of the target battery (step SA1-1), a process of inputting data obtained by measuring load characteristics of the target battery (step SA1-2), a process of estimating static parameters of the target battery (step SA1-3), and a process of estimating dynamic parameters of the target battery (step SA1-4).

Basic specifications of the secondary battery to be diagnosed are input to the analysis software (step SA1-1). The basic specifications input can include, but are not limited to, for example, the following.
- Electrode compositions of positive and negative electrodes (constituent materials, content ratios, particle sizes, and the like)
- Electrode thicknesses, densities, and tortuosities (approximately 1.5 in many cases) of positive and negative electrodes
- Materials, thicknesses, and electrical conductivities of positive and negative electrode current-collecting foils
- Thickness and porosity of separator
- Composition of electrolyte (constituent materials, content ratios)
- Thermal conductivities and heat capacities of the constituent materials (basic physical property values specific to the materials)
- Electrode area

With the diagnosis being basically performed non-destructively, accurate composition information of the electrolyte at the time of diagnosis cannot be obtained. Therefore, general information of the secondary battery to be diagnosed (or specification of a new battery) is obtained and input as parameters. Although some values need to be input when the simulation is actually performed, the composition of the electrolyte does not significantly affect the result of the simulation. In the diagnostic method of the present embodiment, the role of the electrolyte composition information is only for reference purposes.

Although the densities of the positive and negative electrodes are also expected to change due to expansion from initial states, accurate values at the time of diagnosis cannot be measured. Therefore, an initial value (specification value or the like) or a value predicted from the initial value is input. If the value is completely unknown, a typical value may be input. If necessary, fine adjustment may be performed in step SA1-4.

The data obtained by measuring the load characteristics of the target battery is input to the analysis software (step SA1-2). The data obtained by measuring the load characteristics of the target battery is, as described above, a discharge curve obtained by measuring the target battery at a plurality of discharge rates, or the like. The "data obtained by measuring the load characteristics of the target battery" is hereinafter also referred to as "actual measurement data".

The static parameters of the target battery are estimated from the actual measurement data and the model equation (step SA1-3). For example, the static parameters of the target battery are adjusted so as to match a shape of the discharge curve obtained by measurement at an extremely low discharge rate. The discharge curve obtained by measurement at an extremely low discharge rate (0.02 C, for example) can be considered to approximately coincide with a voltage curve when no load is connected (open-circuit voltage curve (OCV)). The static parameters can include, but are not limited to, for example, the following.
- Capacities per unit weight of positive and negative electrode active materials (battery after use decreases in discharge capacity)
- Respective utilization rates of positive and negative electrode active materials (not all regions are mutually used)
- Maximum voltage and minimum voltage of target battery usage range

The dynamic parameters of the target battery are estimated from the actual measurement data and the model equation (step SA1-4). For example, a simulation is performed in which the target battery is discharged at a current value equivalent to that of the measurement conditions of actual measurement data, and the dynamic parameters are adjusted while comparing the data obtained by this simulation result and the actual measurement data such that the two coincide. This simulation can be performed using, for example, the discharge curve prediction of Battery Design Studio described above. The dynamic parameters may include, but are not limited to, for example, the following.
- Electrolyte conductivity
- Electrolyte diffusion coefficient
- Solid phase diffusion coefficients of positive and negative electrode active materials
- Heat capacity of target battery

The ambient temperature at the time of the simulation is preferably set so as to coincide with the ambient temperature at the time of actual measurement data acquisition. In the case of a medium or larger sized product battery, particularly, a product battery assumed to be used at a high rate, preferably the influence of heat generation is taken into consideration. To achieve this, preferably measurements are performed at least at 1 C and fitting is conducted with the actual measurement data affected by heat generation. On the other hand, as long as the target battery is a small cell for a desk test or the like, the influence of heat generation need not be considered.

Through the above processes, it is possible to estimate the characteristic parameters of the target battery at the time of diagnosis, including the electrolyte diffusion coefficient Dn of the target battery at the time of diagnosis.

### Process of Obtaining Relationship between Electrolyte Diffusion Coefficient and Discharge Capacity

On the basis of the model equation used in step S1 and the characteristic parameters estimated in step SA1, the relationship between the electrolyte diffusion coefficient and the discharge capacity is obtained (step SA2). More specifically, the discharge capacity is obtained by performing a discharge simulation while changing only the electrolyte diffusion coefficient among the characteristic parameters estimated in step SA1 and keeping the other characteristic parameters constant. A discharge rate and an ambient temperature at the time of the discharge simulation are preferably set in accordance with the reuse application. For example, if the target battery is expected to be used in the application at an average rate of about 1 C, then the discharge rate used when obtaining the relationship between the electrolyte diffusion coefficient and the discharge capacity is also 1 C. Since it is difficult to precisely match all environmental conditions, simulations may be performed using average values.

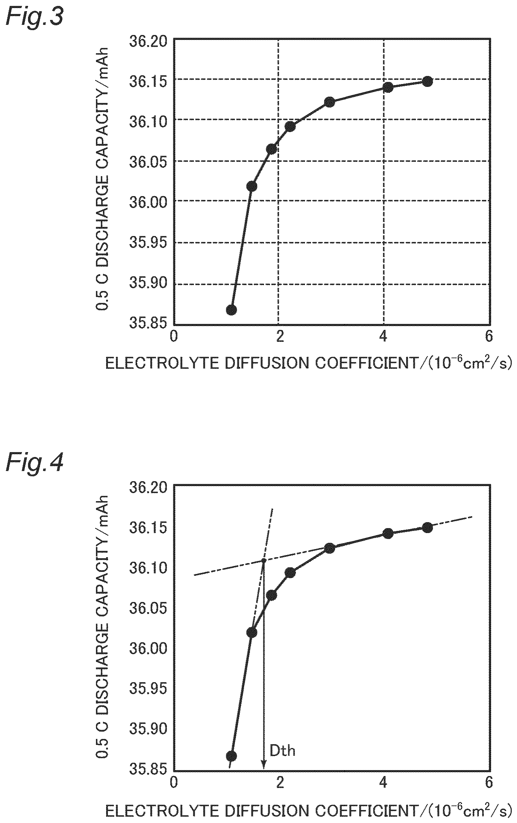

FIG. 3 is a graph showing an example of a relationship between the electrolyte diffusion coefficient and the discharge capacity. In this example, the discharge capacity with the ambient temperature set to 45°C and the discharge rate set to 0.5 C was obtained for each case in which the electrolyte diffusion coefficient was 4.8 x 10⁻⁶, 4.0 x 10⁻⁶, 2.95 x 10⁻⁶, 1.85 x 10⁻⁶, 1.48 x 10⁻⁶, and 1.1 x 10⁻⁶ cm²/s.

As shown in this example, generally, the smaller the electrolyte diffusion coefficient, the smaller the discharge capacity. Further, the relationship between the electrolyte diffusion coefficient and the discharge capacity is not linear, but rather has a tendency to exhibit a curve such that the decrease in discharge capacity increases as the electrolyte diffusion coefficient decreases.

### Process of Determining Threshold Value Dth of Electrolyte Diffusion Coefficient

On the basis of the relationship between the electrolyte diffusion coefficient and the discharge capacity obtained in step SA2, the threshold value Dth of the electrolyte diffusion coefficient is determined (step SA3). More specifically, with reference to the relationship between the electrolyte diffusion coefficient and the discharge capacity obtained in step SA2, the value of the electrolyte diffusion coefficient when the target battery becomes unsuitable for reuse is determined to be the threshold value Dth. A criterion for determining that the target battery is "not suitable for reuse" differs according to the intended reuse application of the target battery. Therefore, the criterion for determining that the target battery is "not suitable for reuse" is set in accordance with the application.

For example, when the discharge capacity becomes equal to or less than a predetermined permissible value, the determination may be made that the battery is not suitable for reuse. In this case, the electrolyte diffusion coefficient when the discharge capacity becomes equal to or less than the predetermined permissible value is determined to be the threshold value Dth. For example, in the example of FIG. 3, in a case in which the permissible value of the discharge capacity is 36.02 mAh, the threshold value Dth is 1.40 x 10⁻⁶ cm²/s.

Alternatively, at the onset of a sharp drop in discharge capacity, the determination may be made that the battery is not suitable for reuse. In this case, the electrolyte diffusion coefficient at the onset of a sharp drop in discharge capacity is determined to be the threshold value Dth. For example, the electrolyte diffusion coefficient when a slope of the discharge capacity is equal to or greater than a predetermined magnitude may be set as the threshold value Dth. Further, as shown in FIG. 4, a point at which tangents of each curve before and after the onset of a sharp drop in discharge capacity intersect may be set as the threshold value Dth.

### Process of Obtaining Difference ΔD between Threshold Value Dth and Electrolyte Diffusion Coefficient Dn at Time of Diagnosis

A difference ΔD between the threshold value Dth determined in step SA3 and the electrolyte diffusion coefficient Dn at the time of diagnosis estimated in step SA1 is obtained (step SA4). For example, if Dn = 2.22 x 10⁻⁶ cm²/s and Dth = 1.40 x 10⁻⁶ cm²/s, then ΔD = Dn - Dth = 0.82 x 10⁻⁶ cm²/s.

This ΔD can be used as an index for the remaining life of the target battery. That is, the target battery can be evaluated as follows: the larger the value of ΔD, the higher the likelihood the target battery can be used for a long period of time, and the smaller the value of ΔD, the lower the likelihood the target battery can be used for a long period of time. Even if the discharge capacities at the time of diagnosis are about the same, ΔD may be different. By using ΔD, it is possible to more accurately evaluate the remaining life of the target battery as compared with known methods in which the remaining life is evaluated on the basis of the magnitude of the discharge capacity at the time of diagnosis.

### Method of Determining Recyclability of Electrode of Secondary Battery

A "secondary battery diagnostic method" using a "threshold value Dth of electrolyte diffusion coefficient" has been described. Now, a "method of determining the recyclability of an electrode of a secondary battery" using such a "threshold value Dth of electrolyte diffusion coefficient" will be described.

A method of determining the recyclability of an electrode of a secondary battery according to an embodiment of the present invention is a method of determining the degree of deterioration of an electrode included in a secondary battery for which determination is to be made (hereinafter referred to as "battery subject to determination"). For example, the recyclability determination method according to the present embodiment involves evaluating the degree of deterioration of an electrode of a battery subject to determination and classifying the battery subject to determination as one of a plurality of classifications (e.g., "horizontally recyclable", "wet-recyclable" or "not suitable for horizontal recycling nor wet recycling").

A battery subject to determination may be a lithium-ion battery, for example. Although not limiting, an electrode of a battery subject to determination may include, for example, a current collector (typically a metal foil) and an electrode mixture layer formed on the current collector. The electrode mixture layer may include, for example, an electrode active material, conductive aid, and a binder. The electrode subject to determination is preferably a positive electrode.

Although not limiting, the battery subject to determination may be, for example, a secondary battery that has been charged and discharged repeatedly and thus decreased its discharge capacity so as to become unsuitable for reuse, and has been collected.

### First Embodiment

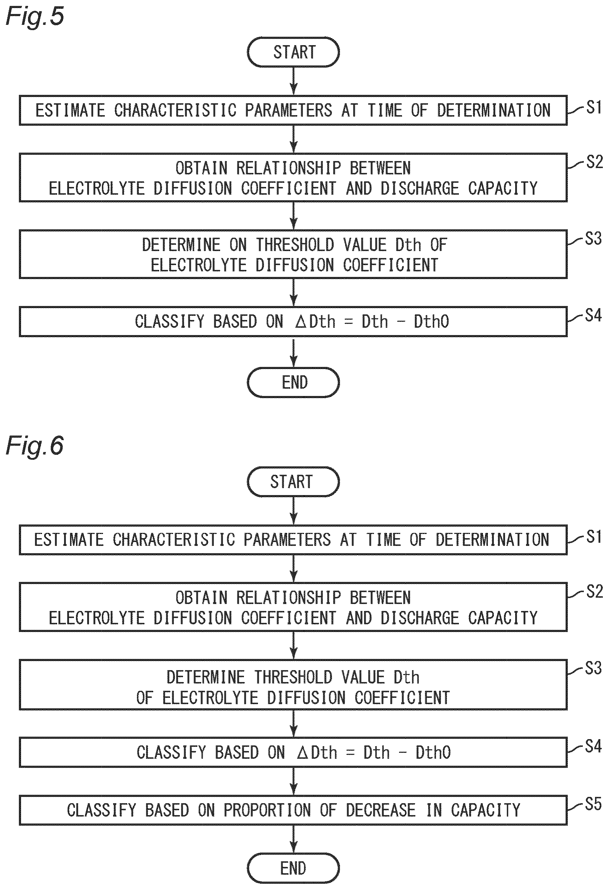

FIG. 5 is a flow chart of a method of determining the recyclability of an electrode of a secondary battery according to an embodiment of the present invention. The recyclability determination method includes the following steps: based on data obtained by measuring the battery subject to determination, estimating characteristic parameters of the battery subject to determination at the time of determination using a predetermined model equation, the characteristic parameters including the electrolyte diffusion coefficient of the battery subject to determination at the time of determination (step S1); based on the model equation and the estimated characteristic parameters, calculating the discharge capacity found when the electrolyte diffusion coefficient has been changed, and obtaining the relationship between the electrolyte diffusion coefficient and the discharge capacity (step S2); based on the relationship between the electrolyte diffusion coefficient and the discharge capacity, determining a threshold value Dth of electrolyte diffusion coefficient (step S3); and comparing the threshold value Dth and a threshold value Dth0 of electrolyte diffusion coefficient before deterioration obtained in advance for the battery subject to determination or a secondary battery of the same type as the battery subject to determination, and, based on the difference between the threshold value Dth and the threshold value Dth0, ΔDth = Dth - Dth0, classifying the battery subject to determination (step S4).

According to the present embodiment, first, as is the case with the secondary battery diagnostic method, measured data is obtained from a battery subject to determination and characteristic parameters at the time of determination are estimated from that data, and a threshold value Dth of electrolyte diffusion coefficient is determined based on those characteristic parameters (steps S1 to S3). Steps S1 to S3 may be performed in the same manner as steps SA1 to SA3 of the secondary battery diagnostic method (FIG. 1). This threshold value Dth is compared with a threshold value Dth0 of the secondary battery before deterioration that has been obtained in advance, and the battery subject to determination is classified based on the difference ΔDth = Dth - Dth0 between the threshold value Dth and the threshold value Dth0

### (step S4)

The threshold value Dth0 is a threshold value of electrolyte diffusion coefficient that has been determined by performing, in advance and before deterioration, the same steps as steps S1 to S3 on the battery subject to determination or a secondary battery of the same type as the battery subject to determination. A battery "before deterioration" is preferably a battery before the beginning of use, i.e., a new battery.

"Secondary battery of the same type as the battery subject to determination" means a secondary battery that is generally the same as the battery subject to determination in terms of the material and shape of the positive and negative electrodes, as well as the type and amount of the electrolyte, for example. For example, if the battery subject to determination is a manufactured product, "secondary battery of the same type as the battery subject to determination" means a secondary battery of the same model number, for example. If a threshold value Dth0 is determined using a "secondary battery of the same type as the battery subject to determination", it is preferable to determine a threshold value Dth0 using a plurality of secondary batteries and calculate the average value.

During steps S1 to S3, the same model equation, the same conditions for discharge simulation and the same criteria for determining that "the battery is not suitable for reuse", for example, are used both for determining a threshold value Dth and for determining a threshold value Dth0. Particularly, the same magnitude of electric current during discharge simulation is used for determining a threshold value Dth and for determining a threshold value Dth0. For example, if the discharge rate for determining a threshold value Dth0 is 1 C, the magnitude of current for determining a threshold value Dth is to be a magnitude equivalent to 1 C with respect to the cell capacity at the time at which the threshold value Dth0 was determined. The threshold values Dth and Dth0 vary depending on the magnitude of current during use. In view of this, at step SA2 (FIG. 1), it is preferable to perform discharge simulation taking account of the normal range of rates in which that battery is used.

On the other hand, during the step of estimating characteristic parameters at the time of determination, it is not necessary to update all the characteristic parameters of the battery subject to determination. For example, for characteristic parameters that are assumed to remain substantially unchanged during deterioration, the same characteristic parameters that were estimated when the threshold value Dth0 was determined may be used. Thus, to estimate the characteristic parameters at the time of determination, it is sufficient if the data required to estimate the characteristic parameters to be updated is available, i.e., it is not necessarily required that the same types of data as the measured data used for determining the threshold value Dth0 be available. For example, the only data used for estimating the characteristic parameters at the time of determination may be a discharge curve for a single discharge rate. Of course, if discharge curves for a plurality of discharge rates are available, it is preferable to use them.

When estimating characteristic parameters at the time of determination, it is preferable to perform fitting by changing, among the characteristic parameters estimated when the threshold value Dth0 was determined, only the discharge capacity, electrolyte diffusion coefficient and electrolyte conductivity, while the other characteristic parameters are fixed to the values estimated when the threshold value Dth0 was determined. Although fitting may be performed by changing all the characteristic parameters when estimating the characteristic parameters at the time of determination, the larger number of parameters may result in an inaccurate fitting unless an experienced technician performs the task.

According to the present embodiment, the battery subject to determination is classified based on the difference between the threshold values Dth and Dth0, ΔDth = Dth - Dth0. For example, if the difference ΔDth is not larger than a predetermined border value, the battery subject to determination is classified into a first classification; if the difference ΔDth is larger than the predetermined border value, the battery subject to determination is classified into a second classification.

It has been found by experiment that an electrode of a secondary battery is highly likely to have experienced structural deterioration if the threshold value Dth has been changing in an increasing trend as cycle deterioration progressed, i.e., ΔDth > 0. In view of this, for example, the "predetermined border value" may be zero and it may be determined that an electrode of a secondary battery with ΔDth larger than zero (i.e., secondary battery classified into the second classification) is not suitable for horizontal recycling nor wet recycling.

ΔDth contains an error in analysis of about 0.01 x 10⁻⁶cm²/sec. In view of this, the above-mentioned "predetermined border value" (i.e., border value for separating the first and second classifications) is preferably set to a value within a range of -0.01 x 10⁻⁶ to 0.01 x 10⁻⁶cm²/sec. For example, if the "predetermined border value" is set to 0.01 x 10⁻⁶cm²/sec, a battery subject to determination is classified into the first classification if the difference ΔDth is not larger than 0.01 x 10⁻⁶cm²/sec, and into the second classification if the difference ΔDth is larger than 0.01 x 10⁻⁶cm²/sec.

The classified secondary battery may be subjected to further measurement and/or testing to determine a type of recycling. For example, the classifying step S4 may be performed as a primary screening and further measurement and/or testing may only be performed on the secondary batteries classified into the first classification or those classified into the second classification. Furthermore, the first and second classifications may require different additional measurements and tests.

A method of determining the recyclability of an electrode of a secondary battery according to the first embodiment of the present invention has been described. The present embodiment allows determination of the degree of deterioration of an electrode to be recycled.

### Second Embodiment

FIG. 6 is a flow chart of a method of determining the recyclability of an electrode of a secondary battery according to a second embodiment of the present invention. In addition to the steps included in the recyclability determination method according to the first embodiment (FIG. 5), the present recyclability determination method further includes the step of classifying the battery subject to determination based on the proportion of decrease in the discharge capacity of the battery subject to determination (hereinafter referred to as "proportion of decrease in capacity") (step S5). Although FIG. 6 shows that the step of classifying the battery subject to determination based on the proportion of decrease in capacity (step S5) is performed after the step of classifying the battery subject to determination based on the difference ΔDth (step S4), the order of steps S4 and S5 may be reversed.

The proportion of decrease in capacity is the discharge capacity of the secondary battery before use (i.e., new battery) minus the discharge capacity of the secondary battery at the time of determination, divided by the discharge capacity of the secondary battery before use (i.e., new battery). Since the discharge capacity of a secondary battery decreases for various reasons, a high proportion of decrease in capacity of a secondary battery (i.e., cell) does not necessary mean that the electrode has deteriorated to the same degree. Nevertheless, if the proportion of decrease in capacity of a secondary battery is high, the electrode is also likely to have deteriorated, and may be determined to be not suitable for at least horizontal recycling.

At the step of classifying the battery subject to determination based on the proportion of decrease in capacity (step S5), secondary batteries are classified, for example, as those with a proportion of decrease in capacity lower than a predetermined threshold and those with a proportion of decrease in capacity not lower than the predetermined threshold. Although the threshold for the proportion of decrease in capacity varies depending on applications after recycling and other factors, it may be 20 to 40 %, for example.

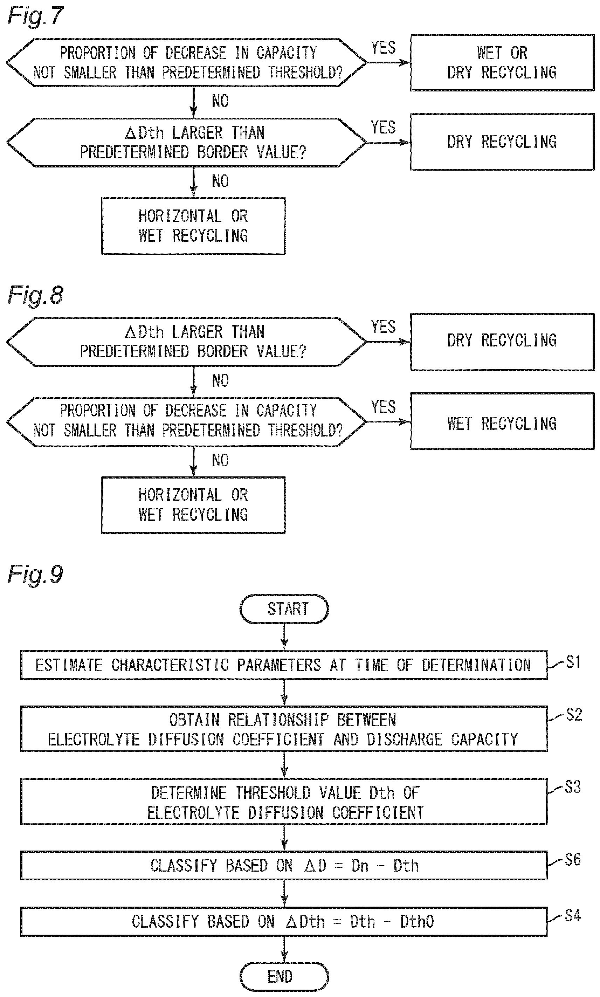

FIG. 7 illustrates an exemplary method of classifying a battery subject to determination according to the present embodiment. In this exemplary method, first, a battery is classified based on the proportion of decrease in capacity. Specifically, a battery with a proportion of decrease in capacity not lower than a predetermined threshold is classified as wet-recyclable or dry-recyclable. A battery with a proportion of decrease in capacity lower than the predetermined threshold is further classified based on the difference ΔDth. Specifically, a battery with a difference ΔDth not larger than a predetermined border value is classified as horizontally recyclable or wet-recyclable, and one with a difference ΔDth larger than the predetermined border value is classified as dry-recyclable.

FIG. 8 illustrates another exemplary method of classifying a battery subject to determination according to the present embodiment. In this exemplary method, first, a battery is classified based on the difference ΔDth. Specifically, a battery with a difference ΔDth larger than a predetermined border value is classified as dry-recyclable. A battery with a difference ΔDth not larger than the predetermined border value is further classified based on the proportion of decrease in capacity. Specifically, a battery with a proportion of decrease in capacity not smaller than a predetermined threshold value is classified as wet-recyclable, and a battery with a proportion of decrease in capacity lower than the predetermined threshold value is classified as horizontally recyclable or wet-recyclable.

The classification processes of FIGS. 7 and 8 are merely illustrative, and the recyclability determination method according to the present embodiment is not limited to these processes. Further, as is the case with the first embodiment, further measurement and testing may be conducted to determine a recycling type.

### Third Embodiment

FIG. 9 is a flow chart of a method of determining the recyclability of an electrode of a secondary battery according to a third embodiment of the present invention. In addition to the steps included in the recyclability determination method according to the first embodiment (FIG. 5), the present recyclability determination method further includes the step of classifying the battery subject to determination based on the difference between the threshold value Dth and the electrolyte diffusion coefficient at the time of determination, ΔD (step S6). The step of classifying the battery subject to determination based on the difference ΔD (step S6) is preferably performed before the step of classifying the battery subject to determination based on the difference ΔDth (step S4).

The recyclability determination method according to the present embodiment is a combination of the secondary battery diagnostic method described with reference to FIG. 1 and the method of determining the recyclability of an electrode of a secondary battery. In other words, the present embodiment performs determination taking account of whether the battery subject to determination is reusable. Specifically, for example, if the difference ΔD is not smaller than a predetermined threshold value, the battery subject to determination is classified as a reusable secondary battery. If the difference ΔD is smaller than the predetermined threshold value, the battery subject to determination is classified as a secondary battery that is not suitable for reuse, and subsequently classified based on ΔDth (i.e., determination of the degree of deterioration of the electrode).

Since the secondary battery diagnostic method and the method of determining the recyclability of an electrode of a secondary battery share common steps S1 to S3, performing these methods in combination will reduce costs for work and calculation.

It will be understood that, in the present embodiment, the step of classifying the battery subject to determination based on the proportion of decrease in capacity, described in connection with the second embodiment (step S5), may further be performed.

### Program and Other Means for Determining Recyclability of Electrode of Secondary Battery

The method of determining the recyclability of an electrode of a secondary battery described above may also be implemented as a computer program. A program for determining the recyclability of an electrode of a secondary battery according to an embodiment of the present invention causes a computer to perform: based on data obtained by measuring the battery subject to determination, estimating characteristic parameters of the battery subject to determination at the time of determination using a predetermined model equation, the characteristic parameters including an electrolyte diffusion coefficient of the battery subject to determination at the time of determination; based on the model equation and the estimated characteristic parameters, calculating a discharge capacity found when the electrolyte diffusion coefficient has been changed, and obtaining the relationship between the electrolyte diffusion coefficient and the discharge capacity; based on the relationship between the electrolyte diffusion coefficient and the discharge capacity, determining a threshold value Dth of electrolyte diffusion coefficient; and comparing the threshold value Dth and a threshold value Dth0 of electrolyte diffusion coefficient before deterioration obtained in advance for the battery subject to determination or a secondary battery of the same type as the battery subject to determination, and, based on the difference between the threshold value Dth and the threshold value Dth0, ΔDth = Dth - Dth0, classifying the battery subject to determination. The present embodiment also allows determination of the degree of deterioration of an electrode to be recycled.

The method of determining the recyclability of an electrode of a secondary battery described above can also be realized as computer-readable recording medium in which the computer program described above is recorded.

The method of determining the recyclability of an electrode of a secondary battery described above may also be implemented as a computer system. A computer system for determining the recyclability of an electrode of a secondary battery according to an embodiment of the present invention includes a memory and a processor, the processor being configured to perform, in accordance with a program in the memory: based on data obtained by measuring the battery subject to determination, estimating characteristic parameters of the battery subject to determination at a time of determination using a predetermined model equation, the characteristic parameters including an electrolyte diffusion coefficient of the battery subject to determination at the time of determination; based on the model equation and the estimated characteristic parameters, calculating a discharge capacity found when the electrolyte diffusion coefficient has been changed, and obtaining the relationship between the electrolyte diffusion coefficient and the discharge capacity; based on the relationship between the electrolyte diffusion coefficient and the discharge capacity, determining a threshold value Dth of electrolyte diffusion coefficient; and comparing the threshold value Dth and a threshold value Dth0 of electrolyte diffusion coefficient before deterioration obtained in advance for the battery subject to determination or a secondary battery of the same type as the battery subject to determination, and, based on the difference between the threshold value Dth and the threshold value Dth0, ΔDth = Dth - Dth0, classifying the battery subject to determination.

### Examples

Hereinafter, the present invention will be described more specifically with reference to examples. The present invention is not limited to these examples.

### Fabrication of Secondary Battery

Medium-sized laminate-type cells having rated capacities of 13 Ah, 5 Ah and 2.7 Ah were fabricated, with a plurality of cells for each of these rated capacities.

### 5 Ah Medium-Sized Laminate-Type Cell

### Fabrication of Positive Electrode

A positive-electrode-mixture-containing slurry was prepared by uniformly mixing 93 parts by mass of LiCoO₂ as a positive electrode active material, 3 parts by mass of carbon black as a conductive aid, and 4 parts by mass of polyvinylidene fluoride (PVDF) as a binder, using N-methyl-2-pyrrolidone (NMP) as a solvent. This positive-electrode-mixture-containing slurry was applied to both sides of a positive electrode current collector made of aluminum foil having a thickness of 15 µm, dried, subsequently pressure-formed using a roller press machine, and then punched out so that a portion of the positive electrode current collector not coated with the positive-electrode-mixture-containing slurry became a tab portion, thereby fabricating the positive electrode.

### Fabrication of Negative Electrode

A negative-electrode-mixture-containing slurry was prepared by mixing 97.5 parts by mass of graphite as a negative electrode active material, 1.5 parts by mass of carboxymethyl cellulose as a binder, and 1 part by mass of styrene-butadiene rubber, and then adding an appropriate amount of water and thoroughly mixing. This negative-electrode-mixture-containing slurry was applied to both sides of a negative electrode current collector made of copper foil having a thickness of 10 µm, dried, subsequently pressure-formed using a roller press machine, and then punched out so that a portion of the negative electrode current collector not coated with the negative-electrode-mixture-containing slurry became a tab portion, thereby fabricating the negative electrode.

### Fabrication of Battery

Seven of the positive electrodes described above and eight of the negative electrodes described above were alternately layered with a polyolefin microporous film separator interposed therebetween to form a multilayer electrode body, the polyolefin microporous film separator having a thickness of 18 µm and a three-layer structure consisting of a polyethylene layer as a middle layer and two polypropylene layers as outer layers.

Next, the tab portions of the positive electrodes of the multilayer electrode body were welded together and the tab portions of the negative electrodes of the multilayer electrode body were welded together and leads were connected respectively thereto. Then, the multilayer electrode body was enclosed inside an outer packaging made from an aluminum laminate film together with a non-aqueous electrolyte prepared by dissolving LiPF₆ at a concentration of 1 mol/L in a solution obtained by mixing ethylene carbonate, diethyl carbonate, and methyl ethyl carbonate at a volume ratio of 1:1:1, and further dissolving vinylene carbonate in an amount of 1 mass%, thereby fabricating a non-aqueous electrolyte secondary battery with a rated capacity of 5 Ah.

### 2.7 Ah Medium-Sized Laminate-Type Cell

### Fabrication of Positive Electrode

A positive-electrode-mixture-containing slurry was prepared by uniformly mixing 93 parts by mass of LiCoO₂ as the positive electrode active material, 3 parts by mass of carbon black as the conductive aid, and 4 parts by mass of PVDF as the binder, using NMP as the solvent. This positive-electrode-mixture-containing slurry was applied to both sides of a positive electrode current collector made of aluminum foil having a thickness of 15 µm, dried, subsequently pressure-formed using a roller press machine, and then punched out so that a portion of the positive electrode current collector not coated with the positive-electrode-mixture-containing slurry became a tab portion, thereby fabricating the positive electrode.

### Fabrication of Negative Electrode

A negative-electrode-mixture-containing slurry was prepared by mixing 94.5 parts by mass of graphite and 3 parts by mass of SiO particles (D50: 5.0 µm) including a front surface coated with carbon as the negative electrode active material, 1.5 parts by mass of carboxymethyl cellulose and 1 part by mass of styrene-butadiene rubber as the binder, and then adding an appropriate amount of water and thoroughly mixing. This negative-electrode-mixture-containing slurry was applied to both sides of a negative electrode current collector made of copper foil having a thickness of 10 µm, dried, subsequently pressure-formed using a roller press machine, and then punched out so that a portion of the negative electrode current collector not coated with the negative-electrode-mixture-containing slurry became a tab portion, thereby fabricating the negative electrode.

### Fabrication of Battery

Seven such positive electrodes as described above and eight such negative electrode as described above were alternately layered with a polyolefin microporous film separator interposed therebetween to form a multilayer electrode body, the polyolefin microporous film separator having a thickness of 18 µm and a three-layer structure consisting of a polyethylene layer as the middle layer and two polypropylene layers as the outer layers.

Next, the tab portions of the positive electrodes of the multilayer electrode body were welded together and the tab portions of the negative electrodes were welded together before leads were connected to the respective tabs. Then, the multilayer electrode body was enclosed inside an outer packaging made from an aluminum laminate film together with a non-aqueous electrolyte prepared by dissolving LiPF₆ at a concentration of 1 mol/L in a solution obtained by mixing ethylene carbonate and diethyl carbonate at a volume ratio of 3:7, and further dissolving vinylene carbonate in an amount of 1 mass%, thereby fabricating a non-aqueous electrolyte secondary battery with a rated capacity of 2.7 Ah.

### 13 Ah Medium-Sized Laminate-Type Cell

A medium-sized laminate-type cell with a rated capacity of 13 Ah was produced in the same manner as the 5 Ah medium-sized laminate-type cell except that LiCoO₂ was be replaced by LiNi_{0.5}Co_{0.2}Mn_{0.3}O₂ to serve as the positive electrode active material, and the areas of the positive and negative electrodes and separator and the amount of electrolyte were modified in accordance with the target rated capacity.

### Fabrication of Deteriorated Cells

Charge/discharge cycle testing was conducted on medium-sized laminate-type cells with a rated capacity of 5 Ah with different charge/discharge rates and different environment temperatures to fabricate deteriorated cells with reduced discharge capacities of 4.5 Ah and 3.7 Ah. Similarly, a medium-sized laminate-type cell with a rated capacity of 2.7 Ah was used to produce a deteriorated cell with a reduced discharge capacity of 2.4 Ah, and medium-sized laminate-type cells with a rated capacity of 13 Ah were used to fabricate deteriorated cells with reduced discharge capacities of 11 Ah and 12.5 Ah. As used herein, the "discharge capacity" of a battery after deterioration is the discharge capacity measured at a current value of 0.2 C with respect to the "rated capacity" of that battery (such a discharge capacity will be hereinafter referred to as "cell capacity").

### Diagnosis of Recyclability of Electrode of Secondary Battery

For each of these cells, the load characteristics of the cell before and after deterioration were measured. Specifically, the discharge curve of each cell was measured at discharge rates of 0.02 C, 0.2 C, 0.5 C and 1 C with respect to the initial rated capacity of that cell.

Next, a cell before deterioration was used as a battery being diagnosed to determine a threshold value Dth0 of electrolyte diffusion coefficient with the method described in connection with the embodiments. The analysis (i.e., simulation) was conducted using the software Battery Design Studio available from Siemens AG. Among the basic specifications, solvent ratio and salt concentration were input with the same values as those at the time of fabrication.

After the characteristic parameters of the cell before deterioration were estimated, based on the estimated characteristic parameters, discharge capacities at an environment temperature of 45 °C and a discharge rate of 0.5 C were calculated for different electrolyte diffusion coefficients to obtain the relationship between electrolyte diffusion coefficient and discharge capacity. The point at which tangent lines of portions of the curve before and after the onset of the sharp drop in discharge capacity crossed each other was determined, which provided the threshold value Dth0.

Next, a threshold value Dth of electrolyte diffusion coefficient of the cell after deterioration was determined: Among the characteristic parameters estimated when the threshold value Dth0 of electrolyte diffusion coefficient before deterioration had been determined, only the cell capacity, electrolyte diffusion coefficient and electrolyte conductivity were changed and the other characteristic parameters were fixed to the characteristic parameters estimated when the threshold value Dth0 of electrolyte diffusion coefficient before deterioration had been determined, to perform fitting to estimate the threshold value Dth of electrolyte diffusion coefficient after deterioration. The magnitude of electric current during discharge simulation was the same as the magnitude of current at the time when the threshold value Dth0 was determined. Specifically, the magnitude for each battery was set to a value equivalent to 0.5 C with respect to the capacity (i.e., rated capacity) of that battery before deterioration.

The results are shown in Table 1. In Table 1, "LCO" (in Determination Examples 1 to 3) indicates lithium cobalt oxide, "SiO·graphite" (in Determination Example 3) indicates a mixture of graphite and SiO particles with their surfaces covered with carbon, and "NCM" (in Determination Examples 4 and 5) indicates lithium nickel/cobalt/manganese oxide.

**[Table 1]**

| | Positive/negative electrodes | Cell capacity (Ah) | | | Threshold of electrolyte diffusion coefficient (×10⁻⁶cm²/sec) | | | Determination |
|---|---|---|---|---|---|---|---|---|
| | | Initial | After deterioration | Proportion of decrease | Initial | After deterioration | Difference | |
| Determ. Ex. 1 | LCO/graphite | 5.01 | 4.52 | 9.80% | 2.758 | 2.237 | -0.521 | good |
| Determ. Ex. 2 | LCO/graphite | 5.01 | 3.73 | 25.50% | 2.758 | 3.121 | 0.363 | poor |
| Determ. Ex. 3 | LCO/SiO·graphite | 2.72 | 2.45 | 9.90% | 0.937 | 0.885 | -0.052 | good |
| Determ. Ex. 4 | NCM/graphite | 13.18 | 11.01 | 16.50% | 1.739 | 1.814 | 0.075 | poor |
| Determ. Ex. 5 | NCM/graphite | 13.18 | 12.49 | 5.20% | 1.739 | 1.732 | -0.007 | good |

For each Determination Example 1, 3 and 5, the proportion of decrease in capacity of the secondary battery (i.e., cell) was not higher than 10%, suggesting that the proportion of decrease in capacity of the electrode was also not higher than 10 %. Further, the negative value of the difference ΔDth in the threshold value of electrolyte diffusion coefficient before and after deterioration allows an estimation that no structural deterioration of the electrode occurred, either. Thus, the electrodes of these secondary batteries can be determined to be horizontally recyclable or wet-recyclable.

On the other hand, for Determination Example 2, the proportion of decrease in capacity of the secondary battery (i.e., cell) was no lower than 25 %, which is high. It is highly likely that, for this secondary battery, the discharge capacity of the electrode also significantly decreased from its initial value. Further, the positive value of the difference ΔDth in the threshold value of electrolyte diffusion coefficient before and after deterioration allows an estimation that structural deterioration of the electrode is highly likely to have occurred. Thus, the electrode of this secondary battery can be determined to be not suitable for horizontal recycling nor wet recycling.

For Determination Example 4, the proportion of decrease in capacity of the secondary battery (i.e., cell) was low; however, the positive value of the difference ΔDth in the threshold value of electrolyte diffusion coefficient before and after deterioration allows an estimation that structural deterioration of the electrode is highly likely to have occurred. Thus, the electrode of this secondary battery can be determined to be not suitable for horizontal recycling nor wet recycling.

Next, for each determination example, the positive and negative electrodes were recovered from the secondary battery and the proportion of decrease in capacity of the positive electrode, the proportion of decrease in capacity of the negative electrode, the expansion rate of the positive electrode mixture and the expansion rate of the negative electrode mixture were measured. Further, for each determination example, a scanning electron microscopic (SEM) micrograph of the positive electrode of the secondary battery was captured and it was determined whether the active material particles had cracks. The results are shown in Table 2.

**[Table 2]**

| | Positive/negative electrodes | Determination | Proportion of decrease in capacity of negative electrode | Proportion of decrease in capacity of positive electrode | Expansion rate of negative electrode mixture | Expansion rate of positive electrode mixture | Cracks in active material |
|---|---|---|---|---|---|---|---|
| Determ. Ex. 1 | LCO/graphite | good | 16.20% | 5.90% | 8.50% | 5.70% | none |
| Determ. Ex. 2 | LCO/graphite | poor | 31.50% | 22.40% | 10.60% | 5.10% | large number |
| Determ. Ex. 3 | LCO/SiO·graphite | good | 10.20% | 9.60% | 15.10% | 5.40% | none |
| Determ. Ex. 4 | NCM/graphite | poor | 16.30% | 6.10% | 11.10% | 4.60% | large number |
| Determ. Ex. 5 | NCM/graphite | good | 5.30% | 4.80% | 8.90% | 4.30% | very small number |

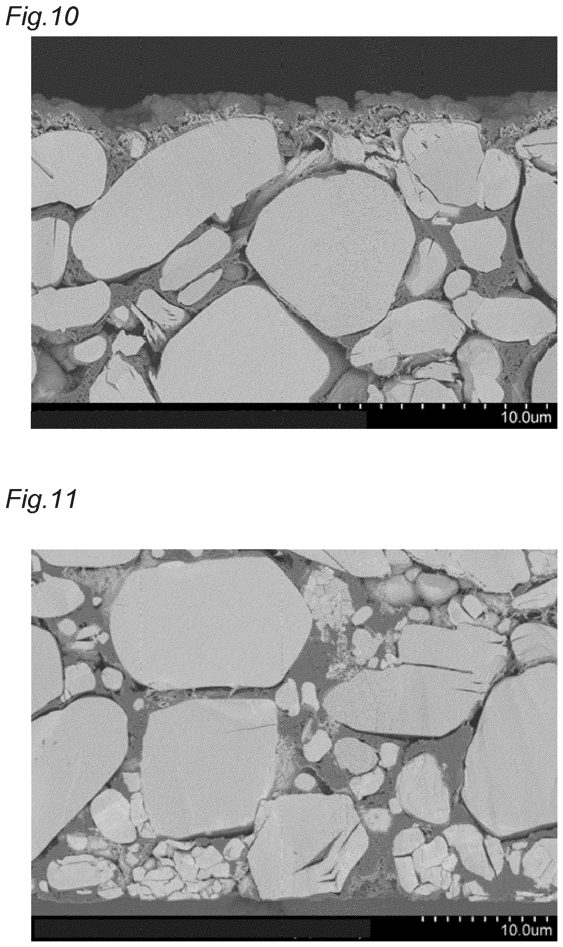

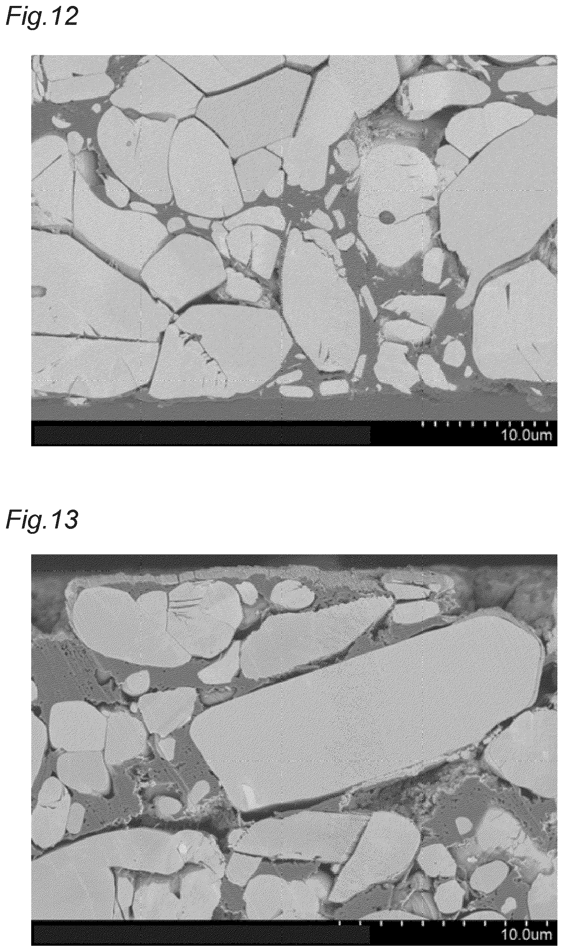

FIG. 10 shows an SEM micrograph of the positive electrodes (LCO) of Determination Examples 1 to 3 in their initial state. FIG. 11 shows an SEM micrograph of the positive electrode of Determination Example 1 after deterioration, FIG. 12 an SEM micrograph of the positive electrode of Determination Example 2 after deterioration, and FIG. 13 an SEM micrograph of the positive electrode of Determination Example 3 after deterioration. It can be seen that no cracks can be found in Determination Examples 1 and 3 (FIGS. 11 and 13), while there are large numbers of cracks in the individual particles of Determination Example 2 (FIG. 12).

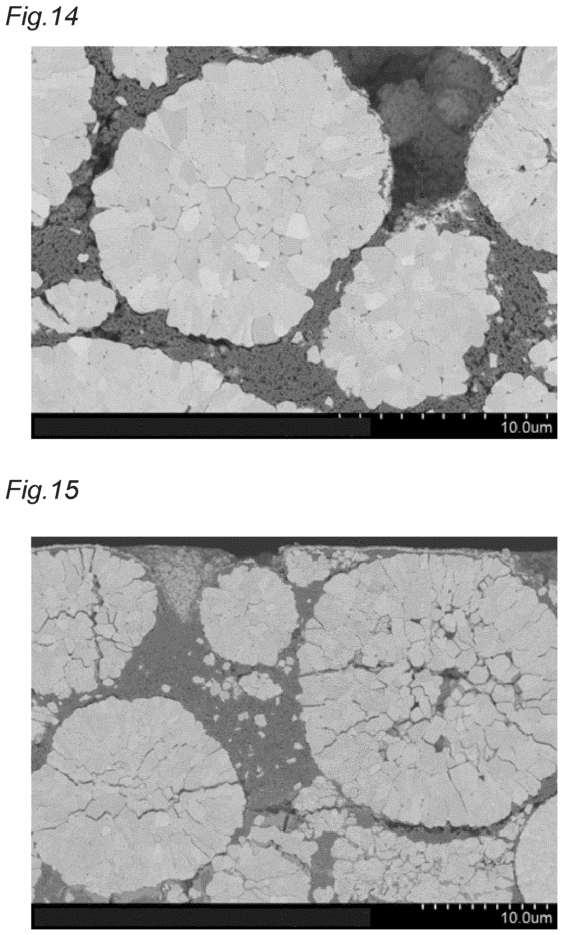

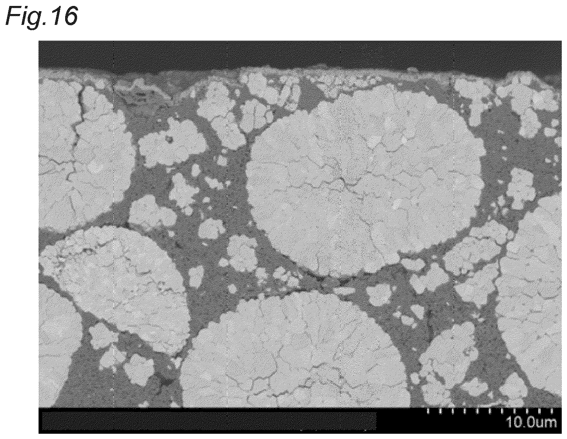

FIG. 14 shows an SEM micrograph of the positive electrodes (NCM) of Determination Examples 4 and 5 in their initial state. The NCM particles are constituted by secondary particles that are sintered bodies of primary particles. FIG. 15 shows an SEM micrograph of the positive electrode of Determination Example 4 after deterioration, and FIG. 16 an SEM micrograph of the positive electrode of Determination Example 5 after deterioration. For Determination Example 4 (FIG. 15), the particles had broken at sintering locations between primary particles, generating large numbers of cracks. On the other hand, there were only few cracks in Determination Example 5 (FIG. 16).

Table 2 and FIGS. 10 to 16 demonstrate that the determination results match well the deterioration conditions of the electrodes.

Further, for each of Determination Examples 1 and 4, the single-electrode discharge characteristics of the positive electrode as horizontally recycled were measured. The results show that Determination Example 1 initially had 0.5 C / 96 % but 0.5 C / 92 % after recycling, which means that a high level was maintained. On the other hand, Determination Example 4 initially had 0.5 C / 94 % but 0.5 C / 72 % after recycling, which is a significant decrease.

Each of the initial percentages for electrodes (0.5 C / 96 % and 0.5 C / 94 %) represents the ratio of the discharge capacity (i.e. cell capacity) at 0.5 C to the discharge capacity at 0.2 C before deterioration. Each of the percentages for the electrodes after recycling (0.5 C / 92 % and 0.5 C / 72 %) represents the ratio of the discharge capacity at 0.5 C to the discharge capacity at 0.2 C, where the discharge capacities at the current values of 0.2 C and 0.5 C were measured in the same manner as for the initial electrodes, where each cell capacity after deterioration indicated in Table 1 represents the "rated capacity" of the relevant battery after recycling.

For example, for Determination Example 1, the initial single-electrode discharge characteristic "0.5 C / 96 %" is the ratio of the discharge capacity measured at 0.5 C (i.e., 2.5 A) with respect to the rated capacity of 5Ah relative to the discharge capacity measured at 0.2 C (i.e., 1 A) with respect to the rated capacity of 5 Ah. The single-electrode discharge characteristic of a horizontally recycled positive electrode "0.5 C / 92 %" is the ratio of the discharge capacity measured at 0.5 C (i.e., 2.25 A) with respect to the cell capacity of 4.5 Ah after deterioration relative to the discharge capacity measured at 0.2 C (i.e., 0.9 A) with respect to the cell capacity 4.5 Ah after deterioration.

The reason why it is possible to determine whether structural deterioration of an electrode occurred based on the difference ΔDth in the threshold value of electrolyte diffusion coefficient before and after deterioration has not completely been clarified, although the following estimation is possible.

It is possible that the threshold value ΔDth of electrolyte diffusion coefficient depends on the internal resistance of the secondary battery. The electrolyte conductivity determined through the analysis herein reflects not only the ohmic resistance and actual resistance of the electrolyte, but also the interface resistance at the time of reaction at the positive and negative electrodes. Thus, the structural deterioration of the electrode (when the active material develops cracks, this generates interfaces with electric discontinuities, leading to a significant increase in resistance) is reflected by the electrolyte conductivity. This allows the assumption that investigating the threshold value Dth of electrolyte diffusion coefficient is equivalent to indirectly evaluating the structural deterioration of the electrode.

The determination results herein mainly reflect the degree of deterioration of the positive electrode. For the negative electrode, too, deterioration increases interface resistance; however, the amount of increase is usually smaller than that for the positive electrode. This is because the negative electrode deteriorates mainly due to deactivation caused by isolation of the active material particles and a shift in potential caused by consumption of Li during SEI generation, and the probability of the negative electrode experiencing structural deterioration such as cracking is lower than that for the positive electrode.

Although embodiments of the present invention have been described above, the present invention is not limited to the above-described embodiments, and various modifications can be made within the scope of the invention.

## Claims

1. A method of determining recyclability of an electrode of a secondary battery by determining a degree of deterioration of an electrode included in a secondary battery subject to determination, comprising:
based on data obtained by measuring the secondary battery subject to determination, estimating characteristic parameters of the secondary battery subject to determination at a time of determination using a predetermined model equation, the characteristic parameters including an electrolyte diffusion coefficient of the secondary battery subject to determination at the time of determination;
based on the model equation and the estimated characteristic parameters, calculating a discharge capacity found when the electrolyte diffusion coefficient has been changed, and obtaining a relationship between the electrolyte diffusion coefficient and the discharge capacity;
based on the relationship between the electrolyte diffusion coefficient and the discharge capacity, determining a threshold value Dth of electrolyte diffusion coefficient; and
comparing the threshold value Dth and a threshold value Dth0 of electrolyte diffusion coefficient before deterioration obtained in advance for the secondary battery subject to determination or a secondary battery of the same type as the secondary battery subject to determination, and, based on a difference between the threshold value Dth and the threshold value Dth0, ΔDth = Dth - Dth0, classifying the secondary battery subject to determination.

2. The method of determining the recyclability of an electrode of a secondary battery according to claim 1, further comprising:
classifying the secondary battery subject to determination based on a proportion of decrease in the discharge capacity of the secondary battery subject to determination.

3. The method of determining the recyclability of an electrode of a secondary battery according to claim 1, further comprising:
classifying the secondary battery subject to determination based on a difference ΔD between the threshold value Dth and the electrolyte diffusion coefficient at the time of determination.

4. The method of determining the recyclability of an electrode of a secondary battery according to claim 1, wherein the characteristic parameters of the secondary battery subject to determination at the time of determination further include an electrolyte conductivity of the secondary battery subject to determination at the time of determination.

5. The method of determining the recyclability of an electrode of a secondary battery according to claim 1, wherein:
classifying the secondary battery subject to determination based on the difference ΔDth = Dth - Dth0 includes:
if the difference ΔDth is not larger than a predetermined border value, classifying the secondary battery subject to determination into a first classification, and, if the difference ΔDth is larger than the predetermined border value, classifying the secondary battery subject to determination into a second classification; and
the predetermined border value is set to a value within a range of -0.01 x 10⁻⁶ to 0.01 x 10⁻⁶cm²/sec.

6. The method of determining the recyclability of an electrode of a secondary battery according to claim 1, wherein the electrode is a positive electrode.

7. The method of determining the recyclability of an electrode of a secondary battery according to claim 1, wherein the secondary battery subject to determination is a lithium-ion battery.

8. A program for determining recyclability of an electrode of a secondary battery by determining a degree of deterioration of an electrode included in a secondary battery subject to determination, the program configured to cause a computer to perform:
based on data obtained by measuring the secondary battery subject to determination, estimating characteristic parameters of the secondary battery subject to determination at a time of determination using a predetermined model equation, the characteristic parameters including an electrolyte diffusion coefficient of the secondary battery subject to determination at the time of determination;
based on the model equation and the estimated characteristic parameters, calculating a discharge capacity found when the electrolyte diffusion coefficient has been changed, and obtaining a relationship between the electrolyte diffusion coefficient and the discharge capacity;
based on the relationship between the electrolyte diffusion coefficient and the discharge capacity, determining a threshold value Dth of electrolyte diffusion coefficient; and
comparing the threshold value Dth and a threshold value Dth0 of electrolyte diffusion coefficient before deterioration obtained in advance for the secondary battery subject to determination or a secondary battery of the same type as the secondary battery subject to determination, and, based on a difference between the threshold value Dth and the threshold value Dth0, ΔDth = Dth - Dth0, classifying the secondary battery subject to determination.
